# FASCICULE DE BREVET EUROPEEN

(11) **EP 1 414 144 B1**
(45) Date de publication et mention de la délivrance du brevet: **05.10.2011**
(21) Numéro de dépôt: 03292671.9
(22) Date de dépôt: 24.10.2003
(51) Int. Cl.: H02M 5/293, H02M 5/257, H05B 39/04

(54) **Procédé et appareil de commande de la puissance moyenne d'alimentation d'une charge en courant alternatif**
Verfahren und Vorrichtung zur Mittelleistungssteuerung einer Wechselstromlast
Method and apparatus for the average power control of an AC load

(30) Priorité: 24.10.2002 FR 0213307
(43) Date de publication de la demande: 28.04.2004
(73) Titulaire: Legrand France, 87000 Limoges (FR); Legrand SNC, 87000 Limoges (FR)
(72) Inventeur: Delaporte, Alain, 87220 Aureil (FR)
(74) Mandataire: Lepelletier-Beaufond, François

(56) Documents cités:
- EP-A- 0 923 274
- US-A- 5 239 255
- US-A1- 2001 014 949

## Description

L'invention a trait d'une façon générale à la commande de la puissance moyenne d'alimentation d'une charge en courant alternatif.

Elle concerne plus particulièrement, afin de piloter au mieux les phases de conduction et de blocage du ou des organes(s) de commutation électronique servant à commander cette puissance, la détection de la présence d'une inductance dans la charge, et plus précisément dans le circuit comportant l'organe de commutation électronique, le réseau d'alimentation et la charge.

On sait que dans un tel circuit, il se produit, en présence d'une inductance, entre les bornes de puissance de l'organe de commutation, lorsqu'il prend un état bloqué alors qu'il était dans un état conducteur où du courant circulait entre ses bornes de puissance, un à-coup de tension (en anglais : voltage surge).

Un élément écrêteur telle qu'une varistance disposée en parallèle entre les bornes de puissance de l'organe de commutation permet de protéger celui-ci contre les effets de tels à-coups de tension, l'énergie accumulée dans l'inductance étant en pratique dissipée par effet joule dans l'élément écrêteur.

La puissance dissipée par ce dernier est fonction de la valeur de l'inductance et est proportionnelle à la fréquence de commutation de l'organe.

Si cette fréquence est élevée, comme dans un appareil variateur de lumière pour installation électrique domestique en courant alternatif à la fréquence de 50 ou de 60 Hz, la puissance à dissiper peut devenir considérable, au point d'être incompatible avec la taille des éléments écrêteurs qu'il est possible de loger dans un tel appareil et avec l'environnement de ce dernier, qui est souvent confiné dans un boîtier fermé ou quasiment fermé.

Pour éviter de dissiper une telle puissance, on a déjà proposé, notamment dans le brevet français 2 802 360, que le dispositif de commande associé à l'organe de commutation soit capable, dans une phase d'initialisation, de déterminer si le circuit dont fait partie l'organe de commutation comporte ou non une inductance, et, si tel est le cas, à adopter un mode de fonctionnement dit "à fermeture de phase" où c'est le blocage de l'organe de commutation qui se produit lorsque l'onde de tension du réseau passe par zéro (moment où le courant circulant dans l'organe passe d'une valeur non nulle à une valeur nulle, la conduction de l'organe ayant été commandée auparavant au cours de la demi-onde de tension qui s'achève), plutôt que le mode de fonctionnement dit "à ouverture de phase" où c'est la conduction de l'organe de commutation qui se produit lorsque l'onde de tension du réseau passe par zéro (moment où la tension aux bornes de l'organe passe d'une valeur non nulle à une valeur nulle, le blocage de l'organe étant commandé ensuite au cours de la demi-onde de tension qui débute).

L'invention vise à améliorer les performances et les conditions d'exécution de l'opération au cours de laquelle il est déterminé s'il y a présence ou non d'une inductance.

L'invention propose à cet effet un procédé de commande de la puissance moyenne d'alimentation d'une charge en courant alternatif, comportant une opération de détection de la présence d'une inductance dans le circuit comportant ladite charge, le réseau d'alimentation, et un organe de commutation électronique commandable en conduction pour autoriser une circulation de courant dans ledit circuit et commandable en blocage pour interrompre une telle circulation de courant, procédé caractérisé en ce que ladite opération de détection de la présence d'une inductance comporte :
- l'opération de rechercher, après une commande en blocage, la présence d'un front descendant de tension entre les bornes de puissance dudit organe de commutation, avec ladite circulation de courant qui s'effectuait, avant cette commande en blocage, d'une première borne de puissance vers une deuxième borne de puissance, laquelle est prise comme potentiel de référence ; et
- l'opération de conclure qu'une inductance est présente dans ledit circuit au cas où ladite opération de rechercher un front descendant de tension est positive dans un laps de temps prédéterminé après ladite commande en blocage.

Plutôt que de rechercher, comme dans les opérations déjà connues susmentionnées, s'il y a dépassement d'un certain seuil de tension après le passage à l'état bloqué de l'organe de commutation, l'invention ne se préoccupe pas d'un tel seuil mais de l'existence d'un front descendant de tension, lequel ne peut appartenir qu'à un à-coup de tension révélant la présence d'une inductance : avec une telle présence, après le passage à l'état bloqué, la tension aux bornes de l'organe de commutation rejoint la tension du réseau en passant par une valeur de crête supérieure à la tension instantanée du réseau alors qu'en l'absence d'inductance, la tension aux bornes de l'organe de commutation rejoint la tension instantanée du secteur sans la dépasser.

On observera qu'au cas où le passage à l'état bloqué de l'organe de commutation s'est effectué alors qu'on en était au tout début d'une onde de tension, par exemple au dixième de sa durée totale (soit 2ms si la fréquence du courant alternatif est de 50 Hz), le courant qui circulait entre les bornes de l'organe de commutation était encore faible, de sorte que la valeur de crête de l'à-coup de tension est susceptible d'être inférieure à la valeur de crête de l'onde de tension du réseau. Dans un tel cas, l'opération de détection déjà connue, basée sur la recherche du franchissement d'un seuil de tension forcément supérieur à la valeur de crête de l'onde de tension du réseau, n'aurait pas reconnue la présence de l'à-coup de tension, alors qu'avec l'invention, même dans un tel cas, l'à-coup de tension est détecté.

On observera encore que l'opération de détection déjà connue était relativement peu sensible, et qu'en particulier une inductance de faible valeur, accumulant donc une énergie relativement faible, ou au contraire une inductance de forte valeur, dans laquelle ne passe qu'une petite intensité de courant, risquait de ne pas être détectée, puisqu'elle produit un à-coup de tension dont la valeur de crête reste modérée, alors qu'avec l'invention de telles inductances sont détectées.

On observera enfin que dans l'opération de détection déjà connue, la sensibilité est dépendante de la valeur de crête de l'onde de tension du réseau et qu'il est donc difficile, voire impossible, de la mettre en oeuvre dans un appareil multi-tension, capable par exemple de fonctionner aussi bien avec une tension efficace de 220 V qu'avec une tension efficace de 115 V, alors qu'avec l'invention, la sensibilité de l'opération de détection est indépendante de la valeur de crête de l'onde de tension du réseau.

Selon des caractéristiques préférées pour des raisons de simplicité et de commodité de réalisation, ladite opération de rechercher la présence d'un front descendant de tension comporte :
- l'opération de produire un signal filtré par filtrage passe-haut de la tension entre les bornes de puissance dudit organe de commutation ; et
- l'opération de détecter dans ledit signal filtré l'apparition d'un front descendant de tension prenant des valeurs négatives ; et éventuellement
- ladite opération de détecter dans ledit signal filtré l'apparition d'un front descendant de tension prenant des valeurs négatives comporte :

- l'opération de mettre en forme ledit signal filtré pour que ledit front descendant de tension prenant des valeurs négatives corresponde à une transition d'un premier état logique à un deuxième état logique prédéterminé ; et
- l'opération de détecter ladite transition avec une unité logique ; et éventuellement
- ledit premier état logique est un niveau de tension à valeur positive de N V, ledit deuxième état logique est un niveau de tension de l'ordre de 0 V, ladite opération de mise en forme comporte un décalage de + N V du signal présent en sortie du filtre et un écrêtage pour que toute partie du signal en sortie dudit filtre inférieure à - N V soit ramenée, après décalage de tension, à 0 V, et pour que toute partie positive du signal en sortie dudit filtre soit ramenée, après décalage, à + N V ; et éventuellement
- ladite valeur positive est de l'ordre de 5 V.

Selon d'autres caractéristiques préférées, en raison des performances qu'elle procure, ledit laps de temps prédéterminé après ladite commande en blocage est au plus compris entre 0,8 et 1,2 ms.

Selon d'autre caractéristique préférées du procédé selon l'invention, permettant la mise en oeuvre de la commande de puissance dans des conditions optimales, ce procédé comporte :
- une opération d'initialisation où est adopté un mode de fonctionnement en ouverture de phase préalablement à ladite opération de détection de la présence d'une inductance ; et
- une opération de passage à un mode de fonctionnement en fermeture de phase au cas où ladite opération de détection de la présence d'une inductance est positive.

L'invention vise également un appareil convenant à la mise en oeuvre du procédé qui vient d'être exposé, comportant :
- un organe de commutation électronique commandable en conduction pour autoriser une circulation de courant d'une première borne de puissance vers une deuxième borne de puissance et commandable en blocage pour interrompre une telle circulation de courant ; et
- un dispositif de commande dudit organe, comportant une unité logique propre à commander ledit organe de commutation et comportant un transducteur propre à transformer un front descendant de tension entre les bornes de puissance dudit organe de commutation en une transition d'état d'un signal exploitable par ladite unité logique du dispositif de commande.

Selon des caractéristiques préférées comme permettant de mettre en oeuvre le transducteur d'une façon particulièrement simple, commode et économique :
- ledit transducteur comporte un filtre passe-haut disposé entre lesdites bornes de puissance et au moins un organe de mise en forme pour transformer, dans le signal présent en sortie dudit filtre, un front descendant de tension prenant des valeurs négatives en une transition d'un premier niveau logique à un deuxième niveau logique exploitable par ladite unité logique ; et éventuellement
- ledit filtre passe-haut comporte un condensateur disposé en série entre une borne d'entrée et une borne de sortie et une résistance disposée en parallèle entre ses bornes de sortie ; et/ou
- ledit filtre passe-haut présente une fréquence de coupure à 1000 Hz et une atténuation de 20 dB par décade ; et/ou
- ledit transducteur comporte, pour la mise en forme du signal présent en sortie dudit filtre, une source de tension continue pour décaler de + N V le signal présent en sortie dudit filtre et au moins un organe écrêteur pour que toute partie du signal en sortie dudit filtre inférieure à - N V soit ramenée, après décalage de tension, à 0 V, et pour que toute partie positive du signal en sortie dudit filtre soit ramenée, après décalage, à + N V ; et éventuellement
- ledit transducteur comporte comme organe écrêteur les diodes de clamp de ladite unité logique ; et/ou
- ladite source de tension employée par ledit transducteur fait partie de l'alimentation en courant continu dudit appareil.
   Selon d'autres caractéristiques préférées permettant de commander la puissance dans des conditions optimales, ladite unité logique est adaptée à commander l'étage de puissance dont fait partie ledit organe de commutation sélectivement dans un mode ouverture de phase ou dans un mode fermeture de phase ; et éventuellement
- ladite unité logique sélectionne à l'initialisation le mode ouverture de phase puis surveille, après une commande en blocage dudit organe de commutation, la présence de ladite transition d'état dans ledit signal exploitable par l'unité logique, dans un laps de temps prédéterminé après ladite commande en blocage et, en cas d'une telle détection de ladite transition, sélectionne le mode de fonctionnement à fermeture de phase ; et éventuellement
- ledit laps de temps prédéterminé est au plus compris entre 0,8 et 1,2 ms.

L'exposé de l'invention sera maintenant poursuivi par la description d'exemples de réalisation, donnée ci-après à titre illustratif et non limitatif, en référence aux dessins annexés. Sur ceux-ci :
- la figure 1 est un schéma d'un circuit comportant une charge, un réseau d'alimentation en courant alternatif et un appareil de commande autorisant et interrompant la circulation de courant dans ce circuit à chaque demi-onde de la tension d'alimentation afin que la puissance moyenne d'alimentation appliquée à la charge soit située entre zéro et la pleine puissance possible, suivant une valeur de consigne donnée à cet appareil ;
- la figure 2 est un chronogramme montrant, avec une échelle de temps commune, portée en abscisse, comment varie respectivement le courant et la tension, portés en ordonnée, aux bornes de l'appareil de commande, dans un exemple de régime de fonctionnement où la charge est alimentée à faible puissance ;

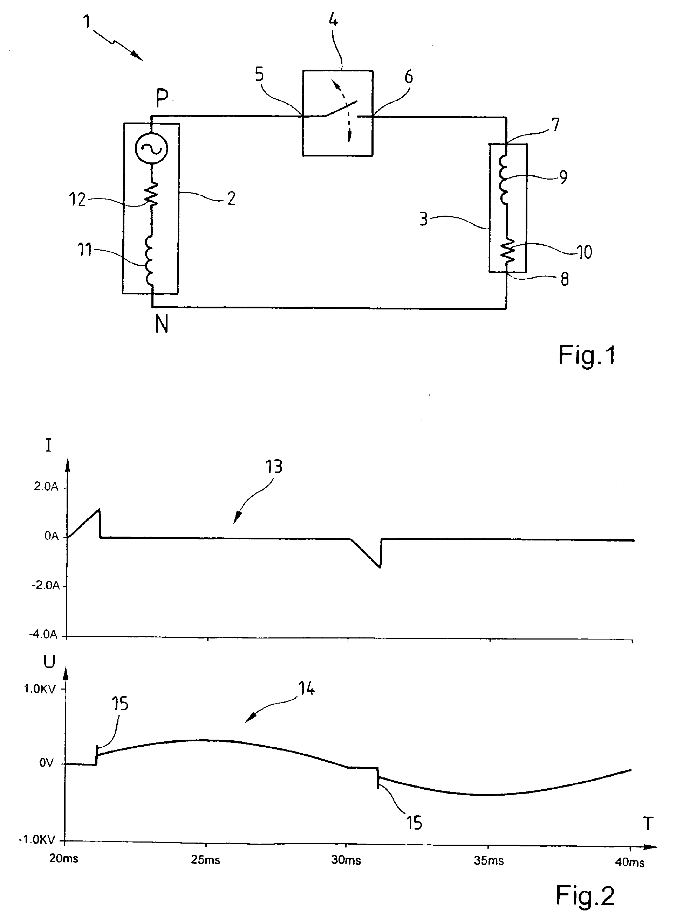

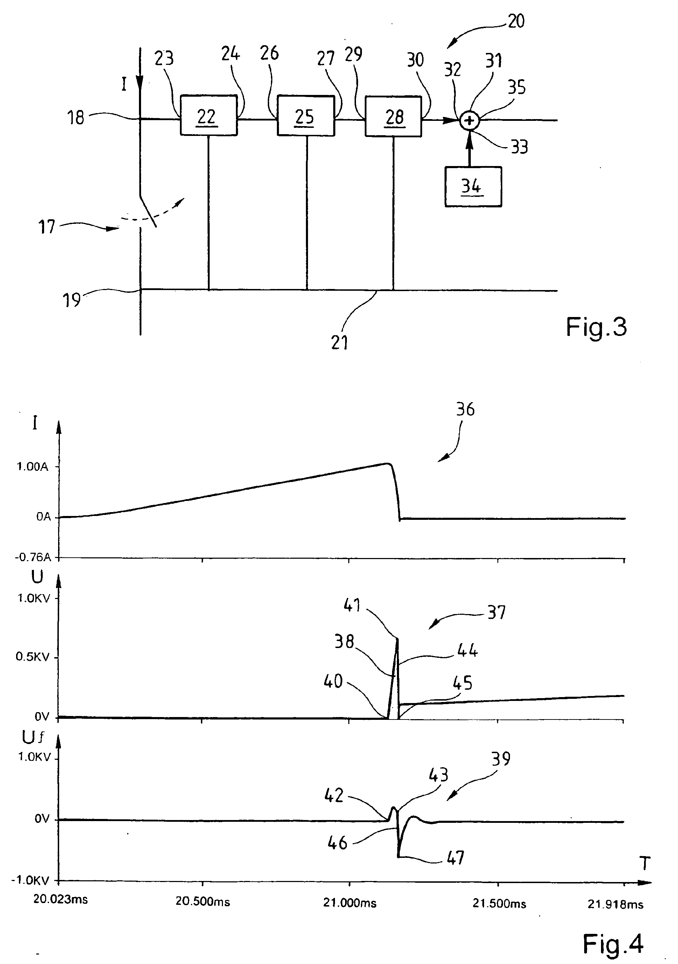

- la figure 3 est un schéma d'une portion de l'appareil montré sur la figure 1, cette portion comportant l'un des deux organes de commutation électronique qui forment l'étage de puissance de l'appareil, en l'occurrence l'organe qui est commandable en blocage lorsque le courant circule dans le sens illustré, alors qu'il est toujours conducteur lorsque le courant circule dans l'autre sens, ainsi qu'un transducteur, représenté sous forme synoptique, capable de transformer un front descendant dans la tension entre les bornes de l'organe de commutation illustré en un signal exploitable par une unité logique que comporte l'appareil pour commander son étage de puissance ;
- la figure 4 est un chronogramme similaire à celui de la figure 2, mais où l'échelle des temps est fortement dilatée, et où est également représentée la tension entre la sortie d'un filtre passe-haut que comporte le transducteur représenté sur la figure 3 et la borne de l'organe de commutation illustré sur cette même figure autre que la borne à laquelle est reliée l'entrée de ce filtre ;
- la figure 5 est un chronogramme montrant d'une façon similaire la tension en sortie du filtre, mais avec l'échelle des temps et l'échelle des tensions qui sont dilatées, et montrant également la tension entre la sortie du transducteur et la borne de l'organe de commutation opposée à celle à laquelle est relié le filtre du transducteur ;
- la figure 6 est un schéma montrant une variante de réalisation de la portion de l'appareil de commande de puissance illustrée sur la figure 3 ;
- la figure 7 est une courbe similaire à celle que l'on voit en bas sur la figure 5, mais pour la variante illustrée sur la figure 6 ;
- la figure 8 est une représentation schématique au complet de l'appareil de commande de puissance montré sur la figure 1 ;
- la figure 9 est un organigramme montrant une phase d'initialisation de cet appareil comportant une opération de détection de la présence d'une inductance ; et
- la figure 10 est un organigramme détaillant le déroulement de cette opération de détection.

Le circuit électrique 1 illustré sur la figure 1 comporte un réseau 2 d'alimentation en courant alternatif présentant un pôle de phase P et un pôle de neutre N, une charge 3 et un appareil 4 de commande de la puissance d'alimentation de la charge 3.

L'appareil 4 comporte une borne 5, appelée "borne de phase", reliée au pôle de phase P du réseau 2 et une borne 6, appelée "borne de phase coupée", reliée à la charge 3, et plus précisément à la borne 7 de cette dernière dont l'autre borne 8 est reliée au pôle de neutre N du réseau 2.

L'appareil 4 est muni d'un étage de puissance qui autorise ou bloque la circulation de courant entre les bornes 5 et 6, en synchronisme avec les ondes de tension du réseau 2 afin de commander la puissance moyenne d'alimentation de la charge 3.

Ici, le réseau 2 est le réseau électrique domestique en courant alternatif à une fréquence de 50 Hz et à une tension efficace de 220 V, l'appareil 4 est un variateur de lumière et la charge 3 est une lampe comportant une ampoule halogène basse tension et un transformateur à enroulements, de sorte qu'elle peut être considérée comme l'association en série d'une inductance 9 et d'une résistance 10.

On notera qu'à la place de la lampe 3, la charge aurait pu être un autre type de lampe, notamment une lampe à ampoule halogène basse tension munie d'un transformateur électronique, présentant donc une capacitance plutôt qu'une inductance, ou encore une lampe à ampoule incandescente, purement résistive.

L'appareil 4, comme on l'expliquera ci-après, est capable de reconnaître le type de charge présent dans le circuit auquel il appartient afin de commander la conduction et le blocage entre les bornes 5 et 6 aux moments opportuns.

Dans l'exemple illustré sur la figure 1, le réseau 2 présente, en outre d'une source de courant alternatif, une inductance 11 et une résistance 12.

Il existe donc, entre les bornes 5 et 6, une inductance totale dont la valeur est la somme de la valeur de l'inductance 9, par exemple 10 mH, et de la valeur de l'inductance 11, par exemple 100 µH, soit une valeur totale de 10,1 mH.

En raison de la présence de cette inductance dans le circuit, il apparaît aux bornes 5 et 6 de l'organe 4 un à-coup de tension à chaque fois que cet organe prend un état bloqué alors qu'il était dans un état conducteur où du courant circulait entre ses bornes.

Dans le régime de fonctionnement illustré sur la figure 2, ainsi que le montre la courbe 13, qui représente l'intensité du courant circulant entre les bornes 5 et 6 en fonction du temps, l'appareil 4 devient conducteur à chaque fois que l'onde de tension passe par zéro, puis l'appareil devient bloquant environ 1 ms après, soit un vingtième de la durée totale d'une onde de tension à la fréquence de 50 Hz, qui est celle du réseau 2, le courant au travers de l'appareil 4 s'annulant alors brutalement, en passant ici d'une valeur instantanée d'environ 1 A à une valeur nulle qu'il garde jusqu'au prochain passage par zéro de l'onde de tension.

Ainsi que le montre la courbe 14 de la figure 2, qui représente la tension entre les bornes 5 et 6 en fonction du temps, il se produit, en raison de l'inductance présente dans le circuit, un à-coup de tension 15 à chaque fois que le courant s'annule dans l'appareil 4 : dans la période transitoire entre le moment où la tension était nulle et celui où elle suit l'onde de tension du réseau 2, elle croît rapidement vers une valeur de crête puis décroît quasi-instantanément avant de rejoindre l'onde de tension du réseau 2.

On observera que dans l'exemple illustré sur la figure 2, la valeur de crête de l'à-coup de tension 15 est inférieure à la valeur de crête de l'onde de tension du réseau. Il n'aurait donc pas été possible de détecter les à-coups de tension 15 par une simple détection du franchissement d'un seuil, un tel seuil étant forcément supérieur à la valeur de crête de l'onde de tension du réseau.

Ainsi qu'on le verra plus en détails par la suite, l'étage de puissance de l'appareil 4 est formé par deux organes de commutation électronique présentant chacun une première borne de puissance et une deuxième borne de puissance, chacun commandable pour autoriser, lorsqu'elle est possible, une circulation de courant de la première borne de puissance vers la deuxième borne de puissance et pour interrompre, lorsqu'elle est établie, cette circulation de courant, alors que chaque organe autorise, sans avoir à être commandé, une circulation de courant de la deuxième borne de puissance vers la première borne de puissance. Les deux organes de commutation sont montés en série inverse, c'est-à-dire qu'ils sont reliés l'un à l'autre par leur deuxième borne de puissance, leur première borne de puissance étant connectée respectivement à la borne 5 et à la borne 6 de l'appareil 4. L'un des organes est commandé lors des parties positives de l'onde de tension tandis que l'autre organe est commandé pendant les parties négatives.

Sur la figure 3 on a illustré très schématiquement l'un de ces organes de commutation, référencé par 17, à l'instant où s'opère la commande en blocage de cet organe pour interrompre la circulation du courant I qui s'effectuait dans le sens allant de sa première borne de puissance 18 vers sa deuxième borne de puissance 19. Sur cette même figure, l'on a représenté un transducteur 20 propre à transformer un front descendant dans la tension entre les bornes 18 et 19, cette dernière étant prise comme potentiel de référence, en un signal exploitable par une unité logique prévue dans l'appareil 4 pour commander l'organe de commutation 17 et l'autre organe composant l'étage de puissance de l'appareil 4.

Le transducteur 20 est représenté de façon synoptique sur la figure 3, sous forme de blocs remplissant les fonctions exposées ci-après.

Le potentiel de référence (masse) du transducteur 20 étant la deuxième borne 19 de l'organe de commutation 17, on a relié à une ligne 21 connectée à la borne 19 chacun des blocs de la représentation synoptique du transducteur 20 dont le fonctionnement nécessite une connexion à la masse.

Le transducteur 20 comporte un filtre passe-haut 22 dont la borne d'entrée 23 est reliée à la borne 18 de l'organe 17, un organe écrêteur 25 ayant une borne d'entrée 26 reliée à la borne de sortie 24 du filtre 22, pour ramener à zéro chaque partie positive de la tension présente à la sortie de ce filtre, c'est-à-dire la tension entre la borne 26 et la ligne 21 ; un organe écrêteur 28 ayant une borne d'entrée 29 reliée à la borne de sortie 27 de l'organe 25, pour ramener à - 5 V chaque partie inférieure à - 5 V de la tension présente à la sortie de l'organe 25, c'est-à-dire la tension entre la borne 29 et la ligne 21 ; un organe additionneur 31 dont une borne d'entrée 32 est reliée à la borne de sortie 30 de l'organe 28 ; et une référence de tension 34, reliée à l'entrée 33 de l'organe additionneur 31 afin de décaler la tension à la sortie de l'organe 28, c'est-à-dire la tension entre la borne 32 et la ligne 21, de la valeur de référence, soit 5 V. Le signal produit par le transducteur 20 est disponible à la borne de sortie 35 de l'organe additionneur 31, c'est-à-dire qu'il s'agit de la tension entre la borne 35 et la ligne 21.

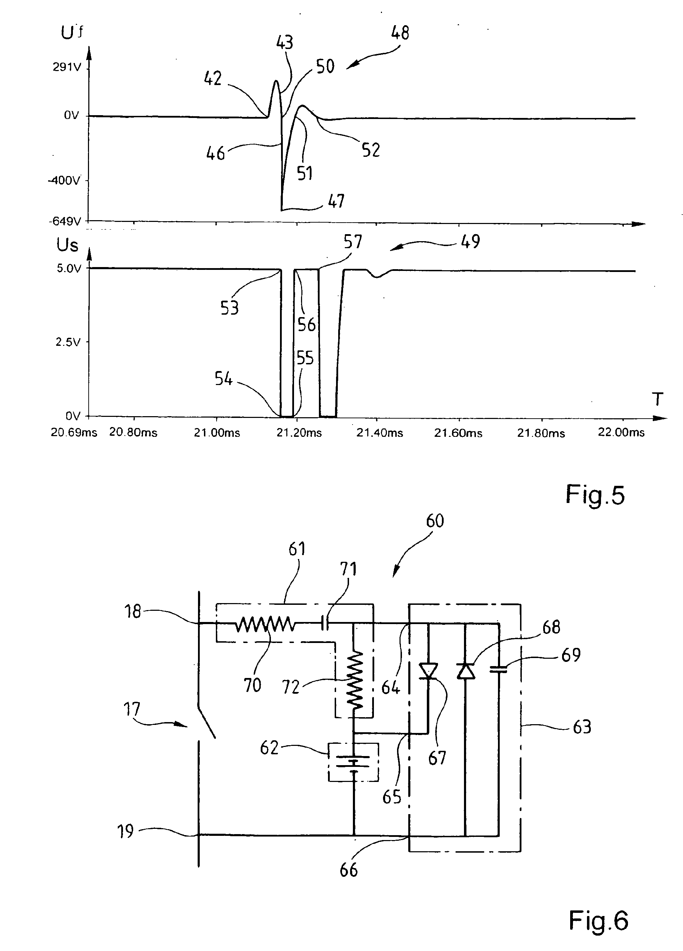

On va maintenant expliquer le fonctionnement du transducteur 20 à l'appui des figures 4 et 5.

Sur la figure 4, les courbes 36 et 37 correspondent respectivement au début de la courbe 13 et au début de la courbe 14 de la figure 2, si ce n'est que l'inductance présente dans le circuit auquel appartient l'organe 17 est ici plus élevée, de sorte que la valeur de crête atteinte par l'à-coup de tension 38 de la courbe 37 est plus élevée que la valeur de crête des à-coups 15 de la courbe 14.

La courbe 39 montre la tension à la sortie du filtre 22, c'est-à-dire entre la borne 24 et la ligne de masse 21, le filtre 22 ayant ici une fréquence de coupure de 1000 Hz et une atténuation de 20 dB par décade.

On voit qu'à la portion de la courbe 37 comprise entre les points 40 et 41, où l'à-coup de tension 38 croît d'une valeur nulle (point 40) à une valeur de crête (point 41), correspond la portion de la courbe 39 située entre les points 42 et 43 puis qu'au front descendant 44 de l'à-coup 38 situé entre le point 41 (crête) et le point 45 (tension nulle), correspond dans la courbe 39 également un front descendant 46 situé entre le point 43 et le point 47 (crête à valeur négative), puis que la courbe 39 regagne ensuite le zéro de tension après quelques oscillations autour de cette valeur.

La présence, dans la courbe 39, du front descendant de tension 46 prenant des valeurs négatives, reflète l'existence du front descendant 44 de l'à-coup 38, et de même l'à-coup 15 de la courbe 14 ou tout autre à-coup dû à la présence d'une inductance dans le circuit est reflété à la sortie du filtre 22 par un front descendant de tension prenant des valeurs négatives.

Le transducteur 20 exploite la portion du front descendant de la tension en sortie du filtre située à proximité immédiate et en-dessous du zéro de tension pour produire, dans un signal appliqué à l'unité logique susmentionnée, une transition du niveau logique haut vers le niveau logique bas, ce qui signalera à l'unité logique qu'il existe une inductance dans le circuit commandé.

La courbe 48 de la figure 5 montre en agrandissement la portion de la courbe 39 reflétant l'à-coup de tension 38, tandis que la courbe 49 de cette même figure montre le signal existant à la sortie du transducteur 20, c'est-à-dire le signal présent entre la borne 35 de l'organe additionneur 31 et la ligne 21.

Les portions positives de la courbe 48, et en particulier la portion située entre le point 42 correspondant au début de l'à-coup 38 et le point 50 correspondant au moment où le front descendant 46 est devenu négatif, et encore la portion située entre les points 51 et 52, sont ramenées à zéro par l'organe écrêteur 25.

Dans la portion de la courbe 48 située entre les points 50 et 51, où la tension est négative, l'organe écrêteur 28 ramène à une valeur de - 5 V chaque partie inférieure à cette valeur.

Ainsi, à la sortie de l'organe écrêteur 28, la tension reste nulle jusqu'au moment correspondant au point 50, elle chute brutalement à la valeur de - 5 V où elle se maintient jusqu'à l'instant où la courbe 58 est à 5 V en-dessous du point 51, la tension rejoignant alors brutalement la valeur zéro et s'y maintenant jusqu'au point 52 où la courbe 48 redevient négative.

On voit que la tension à la sortie de l'organe écrêteur 28 effectue une transition entre le niveau 0 V et le niveau - 5 V à l'instant correspondant au point 50 puis une transition entre le niveau - 5 V et le niveau 0 V à l'instant correspondant au point 51, et que la première transition, s'effectuant au niveau du point 50, est particulièrement franche puisqu'elle correspond au front descendant 46.

L'organe additionneur 31 décale ensuite de + 5 V la tension présente à la sortie de l'organe écrêteur 38, de sorte qu'en sortie de cet organe, c'est-à-dire en sortie du transducteur 20, le front de tension descendant 46, et donc le front de tension descendant 44 de l'à-coup de tension 38, correspond à une transition entre le niveau 5 V et le niveau 0 V (portion de la courbe 49 située entre les points 53 et 54), puis qu'il se produit ensuite à la sortie du transducteur 20 une transition de niveau à chaque fois que la courbe 48 franchit la valeur zéro et qu'elle a encore une amplitude supérieure à 5 V, comme cela se produit, à l'instant correspondant sensiblement au point 51, entre les points 55 et 56, puis, à l'instant correspondant au point 52, au-delà du point 57.

La portion du transducteur 20 située entre la sortie du filtre 22 et la sortie du transducteur est propre à mettre en forme le signal issu de ce filtre pour qu'il soit exploitable par une unité logique, la première transition, du niveau 5 V au niveau 0 V, qui est particulièrement franche, signalant à cette unité qu'il s'est produit un à-coup de tension aux bornes de l'organe de commutation 17.

On observera que la détection d'un à-coup de tension ainsi opérée est particulièrement rapide, puisque dans le signal fourni par le transducteur 20, la première transition entre le niveau haut et le niveau bas se produit après une durée correspondant sensiblement à l'écart entre les points 42 et 50, cet écart étant ici inférieur à 0,05 ms.

En pratique, pour tenir compte des divers temps de réaction, il peut être considéré que le signal représentatif de l'à-coup de tension (transition du niveau haut au niveau bas) sera présent moins de 0,8 à 1,2 ms après la commande en blocage de l'organe 17.

On a d'ailleurs intérêt à ne surveiller l'apparition de ce signal que pendant un tel laps de temps, pour éviter que soit détecté, au lieu d'un à-coup de tension lié à la présence d'une inductance, un phénomène parasite présent sur le réseau d'alimentation 2.

Le transducteur 20 peut être mis en oeuvre d'une façon particulièrement simple, par exemple en réalisant le filtre 22 avec un condensateur disposé entre les bornes 23 et 24 et une résistance disposée entre la borne 24 et la ligne de masse 21 ; en réalisant les organes écrêteurs 25 et 28 avec une diode Zener disposée entre la borne 24 et la ligne 21 avec un sens de conduction allant de borne 24 vers la ligne 21 et une tension inverse de claquage de 5 V ; tandis que l'organe additionneur 31 peut être réalisé avec une source de tension disposée en série entre la sortie de l'organe écrêteur et la sortie du transducteur 20.

En variante, les opérations servant à mettre en forme le signal filtré sont effectuées dans un autre ordre : il est par exemple possible de décaler la tension dès la sortie du filtre et d'effectuer ensuite les écrêtages de niveau haut et de niveau bas.

Une autre variante de réalisation est constituée par le transducteur 60 illustré sur la figure 6.

Le transducteur 60 comporte certains composants qui lui sont propre, regroupés dans le tripôle 61, et utilise d'autres éléments appartenant à l'appareil 4, et plus précisément à son alimentation en courant continu 62 et à son unité logique 63.

La portion de cette unité utilisée dans le transducteur 60 est comprise, d'une part, entre la borne 64 d'entrée du signal de présence d'une inductance et la borne 65 d'alimentation à + 5 V, et, d'autre part, comprise entre la borne 64 et la borne de masse 66, laquelle portion correspond au câblage interne de l'unité 63, qui est en pratique un microcontrôleur.

Entre les bornes 64 et 65 est disposée une diode 67 dont le sens de conduction va de la borne 64 vers la borne 65. Entre les bornes 64 et 66 sont disposés, en parallèle, une diode 68 dont le sens de conduction va de la borne 66 vers la borne 64 et un condensateur 69. Les diodes 67 et 68 sont généralement appelées "diodes de clamp" et le condensateur 69 correspond à la capacité parasite existant entre les bornes 64 et 66.

Le tripôle 61 comporte une résistance 70 et un condensateur 71 disposés en série entre la borne 18 et la borne 64, ainsi qu'une résistance 72 disposée entre les bornes 64 et 65.

Dans l'exemple illustré, les résistances 70 et 72 ont une valeur de 15 kΩ, le condensateur 71 a une valeur 220 pF et la valeur du condensateur parasite 69 est estimée à 10 pF.

Les résistances 70 et 72 ainsi que le condensateur 71 participent à la réalisation du filtre passe-haut, la résistance 70 permettant surtout de limiter la variation instantanée de l'intensité du courant à l'entrée de l'unité 63 afin de ne pas la perturber.

On voit que l'alimentation 62 sert à effectuer le décalage de 5 V puisque la tension entre les bornes 64 et 66 est égale à la somme de la tension en sortie du tripôle 61 (tension entre les bornes 64 et 65) et la tension de + 5 V fournie par l'alimentation 62 (tension entre les bornes 65 et 66).

Les limitations de la tension entre les bornes 64 et 66 respectivement à un niveau haut de + 5 V et à un niveau bas de 0 V sont réalisées respectivement par la diode 67 et par la diode 68.

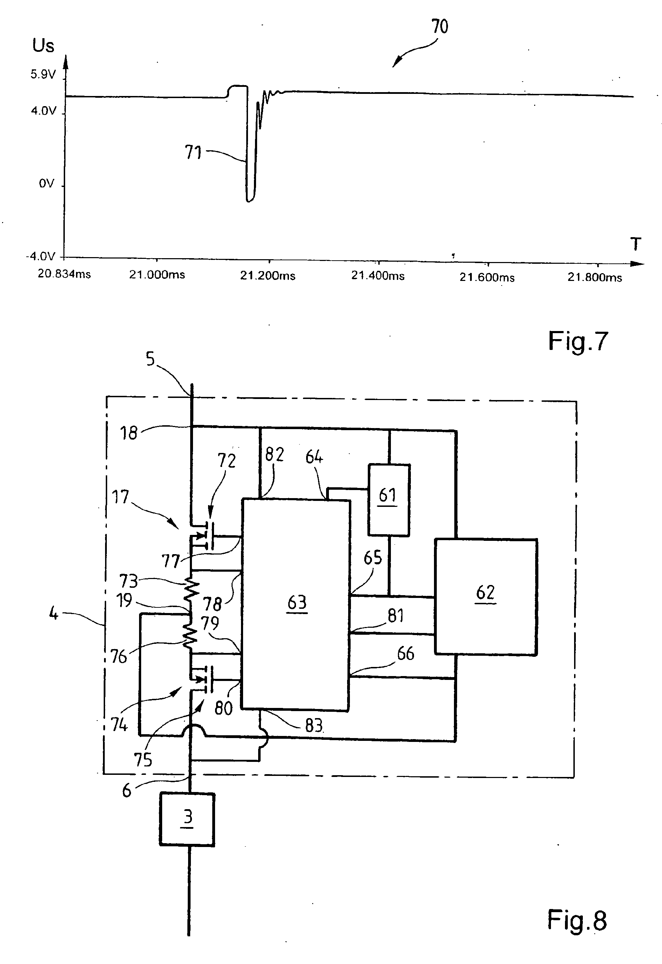

La courbe 70 (figure 7) montre comment varie la tension entre les bornes 64 et 66, cette dernière étant prise comme potentiel de référence, lorsque la tension entre les bornes 18 et 19 de l'organe 17 varie comme montré sur la courbe 37 (figure 4).

On voit que l'on retrouve également ici une transition 71 entre un niveau haut qui reste sensiblement égal à 5 V et le niveau bas qui est sensiblement de 0 V, à un instant correspondant sensiblement à celui où apparaît le front descendant 44 de l'à-coup de tension 38.

La transition 71 signale donc à l'unité logique 63 l'existence du front descendant 44, et donc de l'à-coup de tension 38, et plus généralement la présence de tout à-coup de tension du même type provoqué par la présence d'une inductance dans le circuit.

On observera que la mise en oeuvre du transducteur 60 ne requiert, en propre, que trois composants passifs (les résistances 70 et 72 et le condensateur 71), ce qui est particulièrement simple, commode et économique.

On va maintenant décrire plus complètement l'appareil 4 à l'appui de la figure 8.

Dans l'étage de puissance permettant la circulation du courant entre les bornes 5 et 6, l'organe de commutation 17 précédemment décrit est formé par un transistor MOSFET à canal N 72 et par une résistance 73, l'autre organe de commutation, référencé par 74, étant formé par un transistor 75 identique au transistor 72 et par une résistance 76 identique à la résistance 73.

Dans l'organe 17, le drain du transistor 72 correspond à la première borne 18 tandis la résistance 73 est disposée entre la source du transistor 72 et la deuxième borne 19. La grille du transistor 72 est reliée à la borne 77 de l'unité logique 63, prévue pour commander ce transistor en conduction ou en blocage. La résistance 73, du côté de la source du transistor 72, est reliée à la borne 78 de l'unité 63, qui sert à la synchronisation de la commande des transistors 72 et 75.

Comme indiqué ci-dessus, l'organe de commutation 74 est disposé en série inverse par rapport à l'organe 17. La grille du transistor 75 est reliée à la borne 80 de l'unité 63 servant à commander la conduction ou le blocage de ce transistor. La résistance 76, du côté de la source du transistor 75, est reliée à la borne 80 qui sert à la synchronisation de la commande des transistors 72 et 75.

L'alimentation en courant continu 62 est reliée aux bornes 18 et 19 pour prélever de l'énergie sur le réseau 2. Elle est capable de produire, par rapport à la borne 19 prise comme potentiel de référence, d'une part une tension de + 5 V, qui est appliquée à l'entrée 65 de l'unité logique 63, et d'autre part une tension de + 15 V, qui est appliquée à l'entrée 81 de l'unité logique, et qui sert à celle-ci pour effectuer la commande des transistors 72 et 75.

L'alimentation 62 est par exemple réalisée conformément aux enseignements du brevet français 2 818 459 ou aux enseignements du brevet français 2 819 355, qui proposent des solutions pour produire une alimentation en courant continu en n'ayant accès qu'à deux bornes situées de part et d'autre d'un organe de commutation électronique (et non au pôle de phase et au pôle de neutre d'un réseau d'alimentation), en tirant ici parti du fait que la tension du réseau est présente entre les bornes 18 et 19 quand le transistor 72 est bloqué, et/ou en tirant parti de la tension résiduelle subsistant entre les bornes 18 et 19 lorsque le transistor 72 est conducteur.

L'unité logique 63 est encore reliée, par sa borne d'entrée 82, à la borne de phase 5, et, par sa borne d'entrée 83, à la borne de phase coupée 6, afin de pouvoir commander les transistors 72 et 75 en synchronisme avec la tension du réseau d'alimentation.

Lorsque, dans l'appareil 4, le courant peut circuler de la borne de phase 5 vers la borne de phase coupée 6, c'est-à-dire lors des demi-ondes de tension du réseau positives (potentiel de la borne 5 plus élevé que potentiel de la borne 6), le transistor 72 est conducteur si la tension entre sa grille et sa source est supérieure au seuil de conduction, soit, en pratique, si la tension de la borne 77 de l'unité 63 par rapport à sa borne 66 est supérieure au seuil de conduction ; alors que quand la tension de la borne 77 de l'unité 63 par rapport à sa borne 66 est inférieure au seuil de conduction, le transistor 72 est bloqué.

Ici, l'unité 63 commande le transistor 72 en conduction en portant sa borne 77 à + 15 V par rapport à sa borne 66 tandis qu'elle en commande le blocage en portant sa borne 77 au même potentiel que sa borne 66. Toujours lorsque la tension entre les bornes 5 et 6 est positive, et que le transistor 72 est en conduction, la constitution interne du transistor 75 (existence d'une connexion entre sa source et son électrode de BULK) fait que le courant peut toujours circuler au travers de ce transistor.

Au total, lorsque la tension entre les bornes 5 et 6 et positive, l'étage de puissance de l'appareil 4 est en conduction lorsque l'unité 63 porte sa borne 77 au potentiel de + 15 V par rapport à celui de sa borne 66 tandis que l'étage de puissance est bloqué lorsque l'unité 63 porte sa borne 77 au même potentiel que sa borne 66. De même, lorsque la tension entre les bornes 5 et 6 est négative, l'étage de puissance de l'appareil 4 est conducteur lorsque l'unité 63 porte sa borne 80 au potentiel de + 15 V par rapport à sa borne 66 tandis que l'étage de puissance est bloqué lorsque l'unité 63 porte sa borne 80 au même potentiel que sa borne 66.

L'unité 63 est programmée pour pouvoir faire fonctionner l'appareil 4 soit en mode dit "à ouverture de phase" soit en mode dit "à fermeture de phase".

Dans le mode à ouverture de phase, qui est celui illustré sur la figure 2, l'étage de puissance est mis en conduction au début de chaque demi-onde de tension et est ensuite bloqué à un instant donné de la demi-onde de tension qui est d'autant plus proche du début de cette demi-onde que la puissance moyenne à appliquer à la charge est faible.

La synchronisation par rapport aux ondes de tension du réseau s'effectue grâce aux bornes 82, 83 et 66 de l'unité 63 : après le blocage de l'étage de puissance, la tension du réseau est présente entre la borne 66 et la borne 82 ou 83, ce qui permet à l'unité 63 de savoir quand commence une nouvelle demi-onde (moment où la tension passe d'une valeur non nulle à une valeur nulle).

Dans le mode à fermeture de phase, lorsque débute une demi-onde de la tension du réseau, l'unité 63 maintient l'étage de puissance de l'appareil 4 à l'état bloqué jusqu'à un instant donné de cette demi-onde, puis maintient cet étage conducteur jusqu'à la fin de cette demi-onde, l'instant où s'effectue la mise en conduction étant d'autant plus proche de la fin de la demi-onde que la puissance moyenne à appliquer à la charge est faible.

Pour connaître les instants où débute une demi-onde de tension, l'unité logique 63 surveille la différence de potentiel entre la borne 66 et la borne 78 ou 79, qui est représentative de l'intensité du courant circulant dans l'étage de puissance (les résistances 73 et 76 sont prévues pour créer une petite chute de tension représentatives de l'intensité du courant). L'unité 63 sait qu'une demi-onde de tension débute lorsque l'une ou l'autre des tensions susmentionnées passe d'une valeur non nulle à une valeur nulle.

On observera que l'étage de puissance de l'appareil 4 est symétrique, et qu'il est donc possible de relier sa borne 6 à la phase du réseau d'alimentation et sa borne 5 à la charge, plutôt que l'inverse.

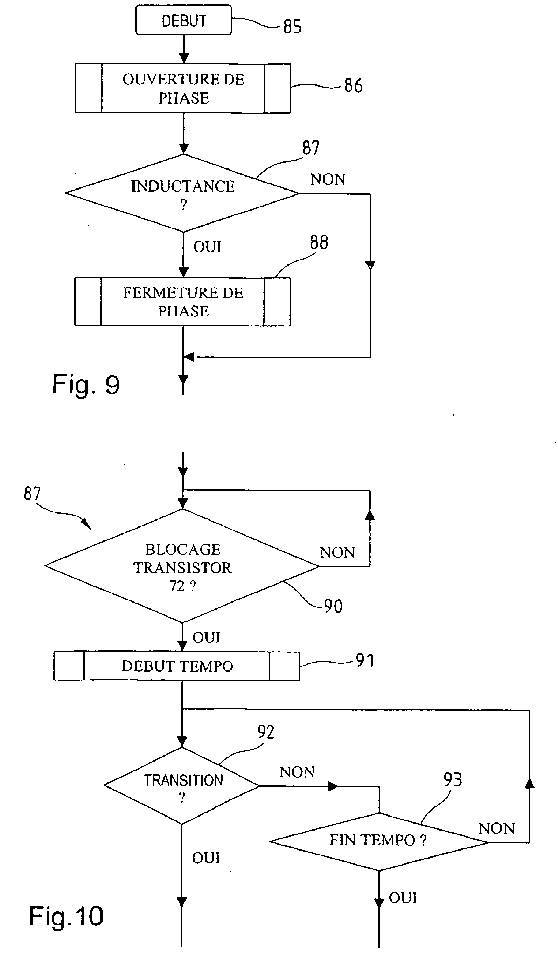

On va maintenant expliquer à l'appui de la figure 9 comment l'unité 63 sélectionne le mode de fonctionnement à ouverture de phase ou à fermeture de phase.

Après une séquence d'initialisation 85 à la mise sous tension, l'unité 63 poursuit son initialisation avec une séquence 86 où elle se place par défaut en mode ouverture de phase.

Elle procède ensuite à une opération 87 de détection de la présence d'une inductance. Si cette détection est positive, l'unité 63 procède à une nouvelle séquence d'initialisation 88 pour se placer en mode fermeture de phase tandis que si cette opération est négative, l'unité 63 poursuit son fonctionnement en restant en mode ouverture de phase.

La figure 10 donne le détail de l'opération 87 de détection de la présence d'une inductance.

L'unité 63 fonctionnant en mode ouverture de phase avant cette opération de détection, il se produit à chaque demi-onde de la tension du réseau une commande en blocage du transistor 72. L'opération 87 commence par une opération 90 de surveillance d'une telle commande en blocage.

Aussitôt que cette commande est détectée, l'unité 63 lance, dans une opération 91, une temporisation d'une durée prédéterminée, par exemple, pour les raisons expliquées ci-dessus, d'une durée d'1 ms, puis surveille l'apparition éventuelle, à sa borne 64, d'un événement tel que la transition 71 (figure 7) représentative de la présence d'une inductance dans le circuit, par une opération de détection 92 qui est répétée tant qu'elle est négative et que l'opération de détection 93 de la fin de la temporisation est négative, la survenance d'une opération 92 positive de détection de la transition signifiant qu'une inductance est présente dans le circuit tandis que la survenance de la fin de la temporisation sans qu'une transition ait été détectée (ici une opération 93 positive) signifie que l'opération 87 est négative.

En variante, l'opération de détection de la présence d'un inductance n'est pas réalisée uniquement après la phase d'initialisation, mais par exemple régulièrement au cours d'un mode de fonctionnement à ouverture de phase, ou encore lorsqu'est prévu un détecteur d'échauffement et que celui-ci détecte, en mode ouverture de phase, qu'un seuil haut de température a été franchi.

De nombreuses autres variantes sont possibles pour l'appareil 4, notamment dans la constitution de ses composants. Il est en particulier possible d'employer un étage de puissance différent, par exemple avec des transistors IGBT plutôt que des transistors MOS, voire de n'employer qu'un seul organe de commutation.

Dans d'autres variantes, un autre type d'unité logique est employé, avec par exemple un niveau logique haut différent de 5 V ou des états logiques autres que des niveaux de tension.

Dans encore d'autres variantes, l'alimentation n'est pas connectée uniquement à la première borne et à la deuxième borne de l'un des organes de commutation, mais à la deuxième borne commune des deux organes de commutation et à la première borne de chacun de ceux-ci, afin de pouvoir exploiter la tension du réseau à chaque fois que l'un des deux organes de commutation est bloqué.

## Revendications

1. Procédé de commande de la puissance moyenne d'alimentation d'une charge (3) en courant alternatif, comportant une opération (87) de détection de la présence d'une inductance (9, 11) dans le circuit (1) comportant ladite charge (3), le réseau d'alimentation (2), et un organe de commutation électronique (17, 74) commandable en conduction pour autoriser une circulation de courant (I) dans ledit circuit (1) et commandable en blocage pour interrompre une telle circulation de courant, procédé **caractérisé en ce que** ladite opération (87) de détection de la présence d'une inductance comporte :
- l'opération de rechercher, après une commande en blocage, la présence d'un front descendant de tension (44) entre les bornes de puissance (18, 19) dudit organe de commutation (17), avec ladite circulation de courant (I) qui s'effectuait, avant cette commande en blocage, d'une première borne de puissance (18) vers une deuxième borne de puissance (19), laquelle est prise comme potentiel de référence ; et
- l'opération de conclure qu'une inductance est présente dans ledit circuit (1) au cas où ladite opération de rechercher un front descendant de tension (44) est positive dans un laps de temps prédéterminé après ladite commande en blocage.

2. Procédé selon la revendication 1, **caractérisé en ce que** ladite opération de rechercher la présence d'un front descendant de tension (44) comporte :
- l'opération de produire un signal filtré (39, 48) par filtrage passe-haut de la tension entre les bornes de puissance (18, 19) dudit organe de commutation (17) ; et
- l'opération de détecter dans ledit signal filtré l'apparition d'un front descendant de tension (46) prenant des valeurs négatives.

3. Procédé selon la revendication 2, **caractérisé en ce que** ladite opération de détecter dans ledit signal filtré (39, 48) l'apparition d'un front descendant de tension (46) prenant des valeurs négatives comporte :
- l'opération de mettre en forme ledit signal filtré (39, 48) pour que ledit front descendant de tension (46) prenant des valeurs négatives corresponde à une transition d'un premier état logique à un deuxième état logique prédéterminé ; et
- l'opération de détecter ladite transition avec une unité logique (63).

4. Procédé selon la revendication 3, **caractérisé en ce que** ledit premier état logique est un niveau de tension à valeur positive de N V, ledit deuxième état logique est un niveau de tension de l'ordre de 0 V, ladite opération de mise en forme comporte un décalage de + N V du signal présent en sortie du filtre et un écrêtage pour que toute partie du signal en sortie dudit filtre (22 ; 61) inférieure à - N V soit ramenée, après décalage de tension, à 0 V, et pour que toute partie positive du signal en sortie dudit filtre (22 ; 61) soit ramenée, après décalage, à + N V.

5. Procédé selon la revendication 4, **caractérisé en ce que** ladite valeur positive est de l'ordre de 5 V.

6. Procédé selon l'une quelconque des revendications 1 à 5, **caractérisé en ce que** ledit laps de temps prédéterminé après ladite commande en blocage est au plus compris entre 0,8 et 1,2 ms.

7. Procédé selon l'une quelconque des revendications 1 à 6, **caractérisé en ce qu'**il comporte :
- une opération d'initialisation (86) où est adopté un mode de fonctionnement en ouverture de phase préalablement à ladite opération (87) de détection de la présence d'une inductance ; et
- une opération (88) de passage à un mode de fonctionnement en fermeture de phase au cas où ladite opération (87) de détection de la présence d'une inductance est positive.

8. Appareil de commande de la puissance moyenne d'alimentation d'une charge (3) en courant alternatif, convenant à la mise en oeuvre du procédé selon l'une quelconque des revendications 1 à 7, comportant :
- un organe de commutation électronique (17, 74) commandable en conduction pour autoriser une circulation de courant d'une première borne de puissance (18) vers une deuxième borne de puissance (19) et commandable en blocage pour interrompre une telle circulation de courant ; et
- un dispositif de commande dudit organe, comportant une unité logique (63) propre à commander ledit organe de commutation (17, 74) et comportant un transducteur (20 ; 60) propre à transformer un front descendant de tension (44) entre les bornes de puissance (18, 19) dudit organe de commutation (17) en une transition d'état d'un signal (49 ; 70) exploitable par ladite unité logique (63) du dispositif de commande.

9. Appareil selon la revendication 8, **caractérisé en ce que** ledit transducteur comporte un filtre passe-haut (22 ; 61) disposé entre lesdites bornes de puissance (18, 19) et au moins un organe de mise en forme (25, 28, 31, 34 ; 62, 67, 68, 69) pour transformer, dans le signal présent en sortie dudit filtre (22 ; 61), un front descendant de tension (46) prenant des valeurs négatives en une transition d'un premier niveau logique à un deuxième niveau logique exploitable par ladite unité logique (63).

10. Appareil selon la revendication 9, **caractérisé en ce que** ledit filtre passe-haut (22 ; 61) comporte un condensateur (71) disposé en série entre une borne d'entrée (18) et une borne de sortie (24 ; 64) et une résistance (72) disposée en parallèle entre ses bornes de sortie (24, 21 ; 64, 65).

11. Appareil selon l'une quelconque des revendications 9 ou 10, **caractérisé en ce que** ledit filtre passe-haut (22) présente une fréquence de coupure à 1000 Hz et une atténuation de 20 dB par décade.

12. Appareil selon l'une quelconque des revendications 8 à 11, **caractérisé en ce que** ledit transducteur (20 ; 60) comporte, pour la mise en forme du signal présent en sortie dudit filtre (22 ; 61), une source de tension continue (31, 34 ; 62) pour décaler de + N V le signal présent en sortie dudit filtre (22 ; 61) et au moins un organe écrêteur (25, 28 ; 67, 68) pour que toute partie du signal en sortie dudit filtre (22 ; 61) inférieure à - N V soit ramenée, après décalage de tension, à 0 V, et pour que toute partie positive du signal en sortie dudit filtre (22 ; 61) soit ramenée, après décalage, à + N V.

13. Appareil selon la revendication 12, **caractérisé en ce que** ledit transducteur (60) comporte comme organe écrêteur les diodes de clamp (67, 68) de ladite unité logique (63).

14. Appareil selon l'une quelconque des revendications 12 ou 13, **caractérisé en ce que** ladite source de tension employée par ledit transducteur (60) fait partie de l'alimentation en courant continu (62) dudit appareil.

15. Appareil selon l'une quelconque des revendications 8 à 14, **caractérisé en ce que** ladite unité logique est adaptée à commander l'étage de puissance (17, 74) dont fait partie ledit organe de commutation (17) sélectivement dans un mode ouverture de phase ou dans un mode fermeture de phase.

16. Appareil selon la revendication 15, **caractérisé en ce que** ladite unité logique (63) sélectionne à l'initialisation le mode ouverture de phase puis surveille, après une commande en blocage dudit organe de commutation (17), la présence de ladite transition de niveau dans ledit signal (49 ; 70) exploitable par l'unité logique (63), dans un laps de temps prédéterminé après ladite commande en blocage et, en cas d'une telle détection de ladite transition, sélectionne le mode de fonctionnement à fermeture de phase.

17. Appareil selon la revendication 16, **caractérisé en ce que** ledit laps de temps prédéterminé est au plus compris entre 0,8 et 1,2 ms.

18. Appareil selon l'une quelconque des revendications 8 à 17 **caractérisé en ce qu'**il comporte deux dits organes de commutation (17, 74) montés en série inverse.

19. Appareil selon la revendication 18, **caractérisé en ce que** chaque dit organe de commutation comporte un transistor MOS (72, 75).

20. Appareil selon l'une quelconque des revendications 8 à 19, **caractérisé en ce qu'**il constitue un variateur de lumière.

## Claims

1. A process for controlling the average supply power of an AC load (3) comprising an operation (87) for detecting the presence of an inductance (9, 11) in the circuit (1) comprising said load (3), the supply network (2) and an electronic switching member (17, 74) which can be switched into a conducting mode to permit a flow of current (I) in said circuit (1) and which can be switched into a non-conducting mode to interrupt such a flow of current, the process being **characterised in that** said operation (87) for detecting the presence of an inductance comprises:
- after a non-conducting switching control the operation of searching for the presence of a falling voltage edge (44) between the power terminals (18, 19) of said switching member (17), with said flow of current (I) which was effected prior to said non-conducting switching control from a first power terminal (18) towards a second power terminal (19) which is taken as the reference potential; and
- the operation of concluding that an inductance is present in said circuit (1) in the case where said operation for searching for a falling voltage edge (44) is positive in a predetermined time lapse after said non-conducting switching control.

2. A process according to claim 1 **characterised in that** said operation of searching for the presence of a falling voltage edge (44) comprises:
- the operation of producing a filtered signal (39, 48) by high pass filtering of the voltage across the power terminals (18, 19) of said switching member (17); and
- the operation of detecting in said filtered signal the appearance of a falling voltage edge (46) assuming negative values.

3. A process according to claim 2 **characterised in that** said operation of detecting in said filtered signal (39, 48) the appearance of a falling voltage edge (46) assuming negative values comprises:
- the operation of shaping said filtered signal (39, 48) so that said falling voltage edge (46) assuming negative values corresponds to a transition from a first logic state to a second predetermined logic state; and
- the operation of detecting said transition with a logic unit (63).

4. A process according to claim 3 **characterised in that** said first logic state is a voltage level with a positive value of N V, said second logic state is a voltage level of the order of 0 V, said shaping operation comprises a shift of + N V of the signal present at the output of the filter and clipping so that every part of the signal at the output of the filter (22; 61) less than - N V is returned after the voltage shift to 0 V and so that every positive part of the signal at the output of the filter (22; 61) is returned after the shift to + N V.

5. A process according to claim 4 **characterised in that** said positive value is of the order of 5 V.

6. A process according to any one of claims 1 to 5 **characterised in that** said predetermined time lapse after said non-conducting switching control is at most between 0.8 and 1.2 ms.

7. A process according to any one of claims 1 to 6 **characterised in that** it comprises:
- an initialisation operation (86) in which a phase opening mode of operation is adopted prior to said operation (87) for detecting the presence of an inductance; and
- an operation (88) for passing to a phase closure operating mode in the situation where said operation (87) for detecting the presence of an inductance is positive.

8. Apparatus for controlling the average supply power of an AC load (3) suitable for carrying out the process according to any one of claims 1 to 7 comprising:
- an electronic switching member (17, 74) switchable into a conducting mode to permit a flow of current from a first power terminal (18) towards a second power terminal (19) and switchable into a non-conducting mode to interrupt said flow of current; and
- a device for controlling said member, comprising a logic unit (63) suitable for controlling said switching member (17, 74) and comprising a transducer (20; 60) suitable for transforming a falling voltage edge (44) across the power terminals (18, 19) of said switching member (17) into a state transition of a signal (49, 70) which can be utilised by said logic unit (63) of the control device.

9. Apparatus according to claim 8 **characterised in that** said transducer comprises a high pass filter (22; 61) between said power terminals (18, 19) and at least one shaping member (25, 28, 31, 34; 62, 67, 68, 69) for transforming in the signal present at the output of said filter (22; 61) a falling voltage edge (46) assuming negative values into a transition from a first logic level to a second logic level which can be utilised by said logic unit (63).

10. Apparatus according to claim 9 **characterised in that** said high pass filter (22; 61) comprises a condenser (71) disposed in series between an input terminal (18) and an output terminal (24; 64) and a resistor (72) disposed in parallel between its output terminals (24, 21; 64, 65).

11. Apparatus according to either one of claims 9 and 10 **characterised in that** said high pass filter (22) has a cut-off frequency at 1000 Hz and an attenuation of 20 dB per decade.

12. Apparatus according to any one of claims 8 to 11 **characterised in that** for shaping the signal present at the output of said filter (22; 61) said transducer (20; 60) comprises a DC voltage source (31, 34; 62) for shifting by + N V the signal present at the output of said filter (22; 61) and at least one clipping member (25, 28; 67, 68) so that every part of the signal at the output of the filter (22; 61) less than - N V is returned after the voltage shift to 0 V and so that every positive part of the signal at the output of the filter (22; 61) is returned after the shift to + N V.

13. Apparatus according to claim 12 **characterised in that** said transducer (60) comprises the clamp diodes (67, 68) of said logic unit (63) as the clipping member.

14. Apparatus according to either one of claims 12 and 13 **characterised in that** said voltage source used by said transducer (60) forms part of the DC supply (62) of said apparatus.

15. Apparatus according to any one of claims 8 to 14 **characterised in that** said logic unit is adapted to control the power stage (17, 74) of which said switching member (17) forms part selectively in a phase opening mode or in a phase closure mode.

16. Apparatus according to claim 15 **characterised in that** said logic unit (63) selects the phase opening mode upon initialisation and then after a non-conducting switching control of said switching member (17) monitors the presence of said level transition in said signal (49; 70) which can be utilised by the logic unit (63) in a predetermined time lapse after said non-conducting switching control and, in the case of such detection of said transition, selects the phase closure operating mode.

17. Apparatus according to claim 16 **characterised in that** said predetermined time lapse is at most between 0.8 and 1.2 ms.

18. Apparatus according to any one of claims 8 to 17 **characterised in that** it comprises two said switching members (17, 74) mounted in inverse series.

19. Apparatus according to claim 18 **characterised in that** each said switching member comprises an MOS transistor (72, 75).

20. Apparatus according to any one of claims 8 to 19 **characterised in that** it constitutes a light dimmer.

## Patentansprüche

1. Verfahren zur Steuerung der mittleren Leistung zur Speisung einer Last (3) mit Wechselstrom, umfassend einen Vorgang (87) zur Ermittlung der Existenz einer Induktivität (9, 11) in dem Stromkreis (1), der die Last (3), das Versorgungsnetz (2) und eine elektronische Schalteinrichtung (17, 74) umfasst, die leitend steuerbar ist, um einen Stromfluss in dem Stromkreis zu erlauben, und die sperrend steuerbar ist, um einen derartigen Stromfluss zu unterbrechen,
Verfahren **dadurch gekennzeichnet, dass** der Vorgang (87) zur Ermittlung der Existenz einer Induktivität die folgenden Vorgänge umfasst:
- Suche nach einer abfallenden Spannungsflanke (44) zwischen den Leistungsklemmen (18, 19) der Schalteinrichtung (17) nach einer sperrenden Steuerung, wobei der Stromfluss (I) vor dieser sperrenden Steuerung von einer ersten Leistungsklemme (18) zu einer zweiten Leistungsklemme (19) erfolgte, die als Bezugspotential herangezogen wird; und
- Folgerung, dass eine Induktivität in dem Stromkreis (1) vorhanden ist, falls die Suche nach einer abfallenden Spannungsflanke (44) innerhalb eines vorbestimmten Zeitraums nach der sperrenden Steuerung positiv ist.

2. Verfahren nach Anspruch 1,
**dadurch gekennzeichnet, dass** die Suche nach dem Vorhandensein einer abfallenden Spannungsflanke (44) die folgenden Vorgänge umfasst:
- Erzeugen eines gefilterten Signals (39, 48) durch Hochpassfiltern der Spannung zwischen den Leistungsklemmen (18, 19) der Schalteinrichtung (17); und
- Ermitteln des Auftretens einer abfallenden, negative Werte annehmenden Spannungsflanke (46) in dem gefilterten Signal.

3. Verfahren nach Anspruch 2,
**dadurch gekennzeichnet, dass** die Ermittlung des Auftretens einer abfallenden, negative Werte annehmenden Spannungsflanke (46) in dem gefilterten Signal (39, 48) die folgenden Vorgänge umfasst:
- Umformen des gefilterten Signals (39, 48), damit die abfallende, negative Werte annehmende Spannungsflanke (46) einem Übergang von einem ersten logischen Zustand in einen zweiten vorbestimmten logischen Zustand entspricht; und
- Ermitteln des Übergangs mit einer logischen Einheit (63).

4. Verfahren nach Anspruch 3,
**dadurch gekennzeichnet, dass** der erste logische Zustand ein Spannungspegel mit positivem Wert N V ist, der zweite logische Zustand ein Spannungspegel in der Größenordnung von 0 V ist, der Umformungsvorgang eine Verschiebung von + N V des am Ausgang des Filters vorhandenen Signals und eine Begrenzung umfasst, damit alle Teile des Signals am Ausgang des Filters (22; 61) kleiner - N V nach Spannungsverschiebung wieder auf 0 V gebracht werden und damit alle positiven Teile des Signals am Ausgang des Filters (22; 61) nach Spannungsverschiebung wieder auf + N V gebracht werden.

5. Verfahren nach Anspruch 4,
**dadurch gekennzeichnet, dass** der positive Wert bei 5 V liegt.

6. Verfahren nach einem der Ansprüche 1 bis 5,
**dadurch gekennzeichnet, dass** der vorbestimmte Zeitraum nach der sperrenden Steuerung höchsten zwischen 0,8 und 1,2 ms liegt.

7. Verfahren nach einem der Ansprüche 1 bis 6,
**dadurch gekennzeichnet, dass** es umfasst:
- einen Initialisierungsvorgang, bei dem ein Phasenanfangsbetriebsmodus vor dem Vorgang (87) zur Ermittlung der Existenz einer Induktivität gewählt wird; und
- einen Vorgang (88) des Wechselns in einen Phasenendbetriebsmodus, falls der Vorgang (87) zur Ermittlung der Existenz einer Induktivität positiv ist.

8. Gerät zum Steuern der mittleren Leistung zur Speisung einer Last (3) mit Wechselstrom, das zur Durchführung des Verfahrens nach einem der Ansprüche 1 bis 7 geeignet ist, umfassend:
- eine elektronische Schalteinrichtung (17, 74), die leitend steuerbar ist, um einen Stromfluss von einer ersten Leistungsklemme (18) zu einer zweiten Leistungsklemme (19) zu erlauben, und die sperrend steuerbar ist, um einen solchen Stromfluss zu unterbrechen; und
- eine Vorrichtung zum Steuern dieser Einrichtung, mit einer logischen Einheit (63), welche die Schalteinrichtung (17, 74) zu steuern vermag, und mit einem Wandler (20; 60), der eine abfallende Spannungsflanke (44) zwischen den Leistungsklemmen (18, 19) der Schalteinrichtung (17) in einen Übergangszustand eines durch die logische Einheit (63) der Steuervorrichtung verwertbaren Signals (49; 70) umzuwandeln vermag.

9. Gerät nach Anspruch 8,
**dadurch gekennzeichnet, dass** der Wandler einen Hochpassfilter (22; 61) umfasst, der zwischen den Leistungsklemmen (18, 19) und wenigstens einer Umformeinrichtung (25, 28, 31, 34; 62, 67, 68, 69) angeordnet ist, um in dem am Ausgang des Filters (22; 61) vorhandenen Signal eine abfallende, negative Werte annehmende Spannungsflanke (46) in einen durch die logische Einheit verwertbaren Übergang von einem ersten logischen Zustand in einen zweiten logischen Zustand umzuwandeln.

10. Gerät nach Anspruch 9,
**dadurch gekennzeichnet, dass** der Hochpassfilter (22; 61) einen in Reihe zwischen einer Eingangsklemme (18) und einer Ausgangsklemme (24; 64) geschalteten Kondensator (71) und einen parallel zwischen seinen Ausgangsklemmen (24, 21; 64, 65) geschalteten Widerstand (72) umfasst.

11. Gerät nach einem der Ansprüche 9 oder 10,
**dadurch gekennzeichnet, dass** der Hochpassfilter (22) eine Grenzfrequenz bei 1.000 Hz und eine Dämpfung von 20 dB pro Dekade aufweist

12. Gerät nach einem der Ansprüche 8 bis 11,
**dadurch gekennzeichnet, dass** der Wandler (20; 61) zur Umformung des am Ausgang des Filters (22; 61) vorhandenen Signals eine Gleichspannungsquelle (31, 34; 62) zum Verschieben des am Ausgang des Filters (22; 61) vorhandenes Signals um + N V und wenigstens eine Begrenzungseinrichtung (25, 28; 67, 68) umfasst, damit alle Teile des Signals am Ausgang des Filters (22; 61) kleiner - N V nach Spannungsverschiebung wieder auf 0 V gebracht werden und damit alle positiven Teile des Signals am Ausgang des Filters (22; 61) nach Spannungsverschiebung wieder auf + N V gebracht werden.

13. Gerät nach Anspruch 12,
**dadurch gekennzeichnet, dass** der Wandler (60) als Begrenzungseinrichtung die Klemmdioden (67, 68) der logischen Einheit (63) umfasst.

14. Gerät nach einem der Ansprüche 12 oder 13,
**dadurch gekennzeichnet, dass** die vom Wandler (60) verwendete Spannungsquelle Teil der Gleichstromspeisung (62) des Gerätes ist.

15. Gerät nach einem der Ansprüche 8 bis 14,
**dadurch gekennzeichnet, dass** die logische Einheit die Leistungsstufe (17, 74), zu der
die Schalteinrichtung (17) gehört, selektiv in einem Phasenanfangsmodus oder in einem Phasenendmodus zu steuern vermag.

16. Gerät nach Anspruch 15,
**dadurch gekennzeichnet, dass** die logische Einheit (63) bei der Initialisierung den Phasenanfangsmodus auswählt, dann, nach einer sperrenden Steuerung der Schalteinrichtung (17), das Vorhandensein des Pegelübergangs in dem durch die logische Einheit (63) verwertbaren Signal (49; 70) in einem vorbestimmten Zeitraum nach der sperrenden Steuerung überwacht und im Falle einer solchen Ermittlung des Übergangs den Phasenendbetriebsmodus auswählt.

17. Gerät nach Anspruch 16,
**dadurch gekennzeichnet, dass** der vorbestimmte Zeitraum höchsten zwischen 0,8 und 1,2 ms liegt.

18. Gerät nach einem der Ansprüche 8 bis 17,
**dadurch gekennzeichnet, dass** es zwei entgegengesetzt in Reihe geschaltete Schalteinrichtungen (17, 74) umfasst.

19. Gerät nach Anspruch 18,
**dadurch gekennzeichnet, dass** jede Schalteinrichtung einen MOS-Transistor (72, 75) umfasst.

20. Gerät nach einem der Ansprüche 8 bis 19,
**dadurch gekennzeichnet, dass** es einen Dimmer bildet.
